# EUROPÄISCHE PATENTSCHRIFT

(11) **EP 3 678 878 B1**
(45) Veröffentlichungstag und Bekanntmachung des Hinweises auf die Patenterteilung: **26.06.2024**
(21) Anmeldenummer: 18729891.4
(22) Anmeldetag: 25.05.2018
(51) Int. Cl.: B60H 1/24, B60H 1/34

(54) **KRAFTFAHRZEUG MIT EINER LUFTAUSLASSVORRICHTUNG FÜR EINEN INNENRAUM DES KRAFTFAHRZEUGS**
MOTOR VEHICLE WITH AN AIR OUTLET DEVICE FOR AN INTERIOR OF THE MOTOR VEHICLE
VÉHICULE À MOTEUR AVEC UN DISPOSITIF DE SORTIE D'AIR POUR UN INTÉRIEUR DU VÉHICULE À MOTEUR

(30) Priorität: 07.09.2017 DE 102017215809
(43) Veröffentlichungstag der Anmeldung: 15.07.2020
(73) Patentinhaber: Bayerische Motoren Werke Aktiengesellschaft, 80809 München (DE)
(72) Erfinder: EICHHORN, Julian, 80639 München (DE); FRÖMEL, Christian, 81541 München (DE); STERN, Jasper, 81925 München (DE); ZOCHER, Rene, 80995 Muenchen (DE)
(86) Internationale Anmeldenummer: PCT/EP2018/063752
(87) Internationale Veröffentlichungsnummer: WO 2019/048089

(56) Entgegenhaltungen:
- WO-A1-2016/157791
- DE-A1- 10 258 955
- DE-U1- 29 915 938

## Beschreibung

Die Erfindung betrifft ein Kraftfahrzeug mit einer Luftauslassvorrichtung für einen Innenraum des Kraftfahrzeugs. Kraftfahrzeuge weisen in der Regel einen oder mehrere Luftausströmer zur Klimatisierung von Fahrzeuginnenräumen auf, die zum Beispiel mittels mechanisch angebundener Laschen ein Einstellen der Richtung und Intensität eines Luftstroms ermöglichen. Derartige Systeme sind beispielsweise aus der DE 102 58 955 A1, der WO 2016/157791A1 oder der DE 299 15 938 U1 bekannt. Üblicherweise ermöglichen solche Laschen ein eingeschränktes mechanisches Steuern von Luftströmen in lokal begrenzten Bereichen und erfüllen zudem nur unzureichend die ästhetischen Anforderungen vieler Kraftfahrzeugbesitzer.

Es ist eine Aufgabe, die der Erfindung zugrunde liegt, ein Kraftfahrzeug mit einer Luftauslassvorrichtung für einen Innenraum des Kraftfahrzeugs zu schaffen, wobei die Luftauslassvorrichtung eine einfache und zuverlässige Bedienung zur Klimatisierung des Innenraums des Kraftfahrzeugs ermöglicht und zudem zu einem erhöhten Komfort des Kraftfahrzeugs beiträgt.

Die Aufgabe wird durch die Merkmale des unabhängigen Patentanspruchs 1 gelöst. Vorteilhafte Ausgestaltungen der Erfindung sind in den Unteransprüchen angegeben.

Gemäß einem Aspekt der Erfindung umfasst das Kraftfahrzeug eine Luftauslassvorrichtung für dessen Innenraum mit einem ersten und einem zweiten Belüftungsspalt, die beabstandet voneinander angeordnet sind. Die Luftauslassvorrichtung umfasst weiter ein Dekorelement, das mit einer Armaturenverkleidung des Kraftfahrzeugs gekoppelt ist und das zwischen dem ersten und dem zweiten Belüftungsspalt angeordnet ist. Die Luftauslassvorrichtung umfasst ferner eine Bedienungseinheit, die mit dem Dekorelement gekoppelt ist und die ein erstes Regulierungselement und ein zweites Regulierungselement aufweist, wobei mittels des ersten Regulierungselements eine Intensität eines Luftstroms durch mindestens einen der Belüftungsspalte und mittels des zweiten Regulierungselements eine Ausrichtung des Luftstroms durch mindestens einen der Belüftungsspalte unabhängig voneinander einstellbar ist.

Mittels der beschriebenen Luftauslassvorrichtung ist ein einfaches und zuverlässiges Bedienkonzept zur Klimatisierung des Innenraums des Kraftfahrzeugs realisierbar, welches zudem zu einem erhöhten Komfort des Kraftfahrzeugs beitragen kann.

Insbesondere ist mittels der beschriebenen Luftauslassvorrichtung ein einfaches und komfortables Bedienen versteckter Luftausströmer, wie Registerausströmer, realisierbar.

In diesem Zusammenhang bezeichnet ein Registerausströmer einen versteckt angeordneten, elektrifizierten Luftausströmer, der elektronisch ansteuerbar ist und dessen Luftstromeigenschaften mittels zwei leicht aufeinander gerichteten, laminaren Einzelströmungen eingestellt werden kann. Eine resultierende Gesamtströmung wird dabei abhängig von Geschwindigkeitsdifferenzen der beiden Einzelströmungen in unterschiedliche Richtungen gelenkt und kann durch den ersten und/oder den zweiten Belüftungsspalt in den Innenraum des Kraftfahrzeugs eintreten.

Mittels der beschriebenen Luftauslassvorrichtung ist ein elektronisches Anzeigebedienkonzept realisierbar, welches insbesondere für elektrifizierte Luftausströmer, wie Registerausströmer, nutzbringend ist, da solche Luftausströmer in der Regel nicht direkt verstellbar ausgebildet sind und ihr aktueller Betriebsstatus nicht direkt angezeigt wird.

In einem eingebauten Zustand der Luftauslassvorrichtung ist das Dekorelement dem Innenraum des Kraftfahrzeugs zugewandt und realisiert eine Verblendung zum Bedecken eines Abschnitts der Luftauslassvorrichtung, um beispielsweise einen Klappenmechanismus zu verdecken, der zum Steuern des Luftstroms in einem Luftkanal der Luftauslassvorrichtung angeordnet ist. Das Dekorelement ist so angeordnet, dass es eine Unterseite des ersten Belüftungsspalts und eine Oberseite des zweiten Belüftungsspalts begrenzt, wobei der erste Belüftungsspalt einen oberen Belüftungszugang und der zweite Belüftungsspalt einen unteren Belüftungszugang zum Innenraum des Kraftfahrzeugs realisiert bezogen auf eine Vertikale des betriebsbereiten Kraftfahrzeugs. Das Dekorelement erfüllt funktionale Anforderungen und zudem einen ästhetischen Aspekt und trägt zum Komfort des Kraftfahrzeugs bei.

Gemäß der Erfindung weisen ferner das erste und das zweite Regulierungselement jeweils ein berührungssensitives Oberflächenelement auf, das in dem Dekorelement integriert ist. Zudem umfasst die Luftauslassvorrichtung eine Steuereinheit, die signaltechnisch mit dem ersten und dem zweiten Regulierungselement gekoppelt ist, sodass mittels der Steuereinheit eine Position eines Gegenstandes auf einer der berührungssensitiven Oberflächenelemente des ersten und/oder zweiten Regulierungselements ermittelbar und dadurch der Luftstrom mittels der Regulierungselemente elektrisch steuerbar ist.

Bevorzugt weisen die beiden Regulierungselemente jeweils eine kapazitive Bedienanzeige mit einem Leuchtmittel auf, die in dem Dekorelement integriert ist und mittels derer der Luftstrom elektrisch steuerbar ist. Eine solche kapazitive 2D-Sensorik ermöglicht eine komfortable Steuerung des Luftstroms der Luftauslassvorrichtung gemäß einem Touchpad und kann zudem versteckt in dem Dekorelement angeordnet werden. Eine veränderte Einstellung der Luftströmung wird mittels der Steuereinheit über Stellmotoren an dem Luftausströmer umgesetzt, die zum Beispiel mit einem Klappmechanismus von Luftsteuerungsklappen gekoppelt sind.

Das Dekorelement ist beispielsweise als teilweise durchleuchtbares Holzelement ausgebildet, in dem die Regulierungselemente samt Bedienanzeige und Leuchtmittel eingebettet sind. Zum Beispiel ist eine jeweilige Bedienanzeige mit Leuchtmittel als berührungsempfindliche hochauflösende Pixelmatrix ausgebildet, die unterhalb einer Oberfläche des Dekorelements angeordnet ist, welche dem Innenraum des Kraftfahrzeugs zugewandt ist. Eine solche in das Dekorelement integrierte Bedienanzeige ermöglicht im Zusammenwirken mit der Steuereinheit das Einstellen der Richtung und der Intensität und gegebenenfalls auch noch das Einrichten einer gewünschten Diffusion oder Fokussierung der durch die Belüftungsschlitze beziehungsweise Belüftungsspalte in den Innenraum austretenden Luftströmung. Alternativ ist eine oder sind beide Bedienanzeigen als niedrig auflösende Segmentanzeigen realisiert, welche als Leuchtmittel eine oder mehrere angeordnete LEDs aufweisen.

Gemäß einer Weiterbildung der Luftauslassvorrichtung ist die Steuereinheit dazu eingerichtet, das jeweilige Leuchtmittel der jeweiligen Bedienanzeige in einem Betriebszustand, in dem ein Gegenstand auf einer der berührungssensitiven Oberflächenelemente des ersten oder zweiten Regulierungselements ermittelt ist, zu aktivieren. Zum Beispiel durch Berührung des Dekorelements mit einem Finger oder einer Hand, kann eine Bedienanzeige aktiviert und/oder beleuchtet werden, sodass eine Funktionsauswahl sichtbar wird.

Außerdem kann die Luftauslassvorrichtung vorteilhaft ein Positionselement umfassen, das dazu eingerichtet ist, eine Position des ersten und/oder zweiten Regulierungselements in Bezug auf das Dekorelement anzuzeigen. Insbesondere in Bezug auf die zuvor beschriebene, versteckte Anordnung der Bedienanzeigen, welche mittels Kontakt aktiviert und/oder beleuchtet werden, ist ein Positionselement nutzbringend, um ein schnelles Auffinden der Bedienungsanzeigen auch in einem nicht aktivierten beziehungsweise unbeleuchteten Zustand zu ermöglichen.

Ein solches Positionselement kann als Markierung in Form eines Punktes oder eines Pfeils in oder an dem Dekorelement angeordnet oder ausgebildet sein. Bevorzugt weist das Positionselement ein Leuchtmittel auf und ist signaltechnisch mit der Steuereinheit gekoppelt ist, sodass das Positionselement mittels der Steuereinheit ansteuerbar ist.

Das Leuchtmittel des Positionselements wird in einem Ruhezustand, in dem kein Gegenstand beziehungsweise händischer Kontakt auf einer der berührungssensitiven Oberflächenelemente des ersten oder zweiten Regulierungselements ermittelt ist, aktiviert und leuchtet zum Auffinden der Bedienanzeigen auf. In einem Betriebszustand, in dem ein Gegenstand auf einer der berührungssensitiven Oberflächenelemente des ersten oder zweiten Regulierungselements ermittelt ist, wird das Leuchtmittel des Positionselements durch die Steuereinheit deaktiviert, um eine Überlagerung zu den beleuchteten Bedienanzeigen zu vermeiden und ein einfaches und übersichtliches Einstellen gewünschter Funktionen des Luftstroms der Luftauslassvorrichtung zu ermöglichen.

Das Positionselement kann somit insbesondere als leuchtfähiges Auffindesymbol realisiert sein, welches zwischen den beiden Teilausströmern beziehungsweise den beiden Belüftungsspalten in dem Dekorelement integriert ist und die gegebenenfalls in dem Dekorelement versteckten Bedienbereiche der Regulierungselemente optisch wahrnehmbar anzeigt. Das Positionselement ist zum Beispiel als optische Schaltfläche mit einer segmentierten LED-Anzeige ausgebildet, die in einem Ruhezustand sichtbar ist, wenn die Regulierungselemente nicht bedient werden. Mittels Drauftippen auf das Positionselement können die Regulierungselemente beziehungsweise ihre jeweiligen Bedienanzeigen aktiviert und vorzugsweise beleuchtet werden und das durch das Positionselement realisierte Auffindesymbol wird deaktiviert.

Gemäß einer weiteren bevorzugten Weiterbildung umfasst die Luftauslassvorrichtung eine Annäherungssensorik, die signaltechnisch mit der Steuereinheit gekoppelt ist und mittels derer eine Annäherung eines Gegenstandes an das erste oder zweite Regulierungselement ermittelbar ist, sodass die Luftauslassvorrichtung in Abhängigkeit von Messsignalen der Annäherungssensorik betreibbar ist. Eine solche Annäherungssensorik weist zum Beispiel einen kapazitiven Sensor, eine Infrarot-LED oder eine Gestenkamera, mittels derer jeweils eine Annäherung eines Gegenstandes an das erste oder zweite Regulierungselement erfasst werden kann.

Auf Antwort einer sich nähernden Hand kann ein zuvor verstecktes Bedienfeld des ersten und/oder zweiten Regulierungselements aktiv geschaltet und beleuchtet werden. Im Zusammenwirken mit einem leuchtfähigen Positionselement kann bei Annäherung einer Hand das Positionselement deaktiviert und die Bedienanzeige der Regulierungselemente beleuchtet werden. Entfernt sich die Hand wieder von dem Dekorelement beziehungsweise dem Bedienfeld der Regulierungselemente kann die Luftauslassvorrichtung nach einer vorgegebenen Zeitspanne von beispielsweise 3 Sekunden oder 5 Sekunden wieder in den Ruhezustand wechseln beziehungsweise die Bedienanzeigen der Regulierungselemente deaktivieren und die eingestellten Luftströmungseigenschaften beibehalten.

Gemäß einer weiteren Weiterbildung umfasst die Luftauslassvorrichtung eine Objekterkennungssensorik, die signaltechnisch mit der Steuereinheit gekoppelt ist und mittels derer eine Position eines Objektes in dem Innenraum des Kraftfahrzeugs ermittelbar ist, sodass die Luftauslassvorrichtung in Abhängigkeit von Messsignalen der Objekterkennungssensorik betreibbar ist. Eine solche Objekterkennung kann kamerabasiert eine Gesichtsverfolgung des Fahrers oder des Beifahrers ermöglichen, sodass ein eingestellter Luftstrom nachgeregelt werden kann. Beispielsweise stellt der Fahrer mittels der Regulierungselemente einen Luftstrom mit gewünschter Intensität ein, der in einer ersten Sitzposition auf seinen Kopf gerichtet ist. Nachfolgend lehnt sich der Fahrer zum Beispiel zurück, sodass mittels der Steuereinheit auf Basis der Objekterkennungssensorik der Luftstrom nachgeführt und gegebenenfalls hinsichtlich seiner Intensität angepasst wird, sodass der gewünschte Luftstrom auch in einer solchen zweiten Sitzposition auf den Kopf des Fahrers gerichtet ist.

Gemäß einer weiteren Weiterbildung ist die Steuereinheit der Luftauslassvorrichtung signaltechnisch mit dem ersten und dem zweiten Regulierungselement und mit einer Multifunktionsanzeige des Kraftfahrzeugs gekoppelt, sodass mittels der Multifunktionsanzeige das erste und/oder zweite Regulierungselement ansteuerbar und dadurch der Luftstrom mittels der Regulierungselemente elektrisch einstellbar ist. Eine solche Multifunktionsanzeige ist zum Beispiel als LCD-Display im Armaturenbereich des Kraftfahrzeugs ausgebildet und ermöglicht zusätzlich zu der zuvor beschriebenen Bedienanzeige der Regulierungselemente ein Einstellen von Luftstromparameter.

Gemäß einer weiteren Weiterbildung weisen das erste und zweite Regulierungselement jeweils eine mechanische Kopplung zu jeweiligen Luftsteuerungsklappen auf, sodass der Luftstrom mittels der Regulierungselemente mechanisch einstellbar ist. Das erste Regulierungselement umfasst zum Beispiel ein drehbares ringförmiges Element und das zweite Regulierungselement ein drehbares kugelförmiges Element zum mechanischen Einstellen des Luftstroms, welche jeweils in dem Dekorelement integriert sind, sodass das ringförmige Element das kugelförmige Element umgibt. Alternativ umfasst das erste Regulierungselement ein verschiebbares Riegelelement und das zweite Regulierungselement ein verschiebbares Gleitelement zum mechanischen Einstellen des Luftstroms, welche in dem ersten oder zweiten Belüftungsspalt angeordnet sind, sodass das Riegelelement und das Gleitelement übereinander oder nebeneinander angeordnet sind.

Gemäß solchen Ausgestaltungen kann die Luftauslassvorrichtung mechanisch eingestellt und der in den Innenraum eintretende Luftstrom hinsichtlich Intensität, Richtung und gegebenenfalls Fokussierung angepasst werden.

Ausführungsbeispiele der Erfindung sind im Folgenden anhand der schematischen Zeichnungen näher erläutert. Es zeigen:
- Figur 1: ein schematisches Ausführungsbeispiel eines Kraftfahrzeugs mit einer Luftauslassvorrichtung,
- Figuren 2A-2C: ein schematisches Ausführungsbeispiel der Luftauslassvorrichtung in perspektivischen Ansichten,
- Figur 3: ein weiteres schematisches Ausführungsbeispiel der Luftauslassvorrichtung in einer perspektivischen Ansicht,
- Figur 4: ein weiteres schematisches Ausführungsbeispiel der Luftauslassvorrichtung in einer perspektivischen Ansicht,
- Figur 5: ein weiteres schematisches Ausführungsbeispiel der Luftauslassvorrichtung in einer perspektivischen Ansicht,

Elemente gleicher Konstruktion oder Funktion sind figurenübergreifend mit den gleichen Bezugszeichen gekennzeichnet. Aus Gründen der Übersichtlichkeit sind die dargestellten Elemente gegebenenfalls nicht in allen Figuren mit Bezugszeichen gekennzeichnet.

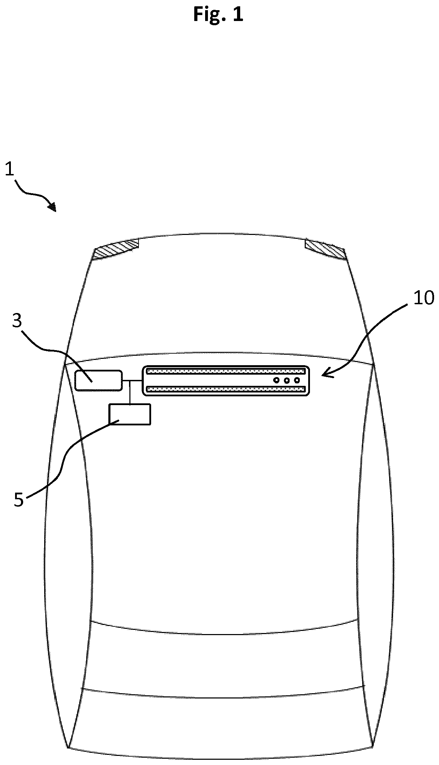

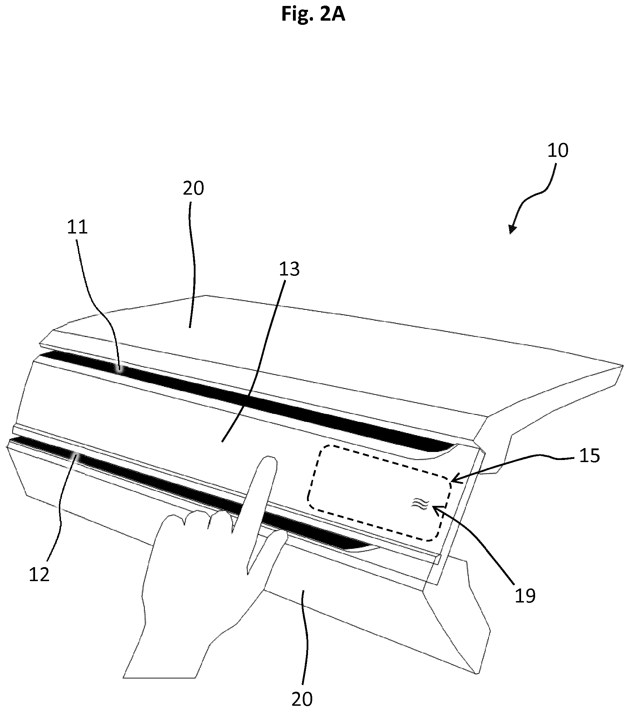

Figur 1 illustriert ein Ausführungsbeispiel eines Kraftfahrzeugs 1, welches eine Luftauslassvorrichtung 10 zum Klimatisieren eines Innenraums des Kraftfahrzeugs 1 umfasst. Die Luftauslassvorrichtung 10 ist signaltechnisch mit einer Steuereinheit 3 und einer Multifunktionsanzeige 5 gekoppelt und ermöglicht, wie nachfolgend anhand der Figuren 2A-5 erläutert wird, ein einfaches und zuverlässiges Bedienkonzept zur Klimatisierung des Innenraums und trägt zudem zu einem erhöhten Komfort des Kraftfahrzeugs 1 bei. Insbesondere ist mittels der Luftauslassvorrichtung 10 ein einfaches und komfortables Bedienen versteckter Luftausströmer, wie Registerausströmer, realisierbar.

Figuren 2A-2C zeigen ein schematisches Ausführungsbeispiel der Luftauslassvorrichtung 10 in perspektivischen Ansichten, welche als Registerausströmer realisiert ist. Die Luftauslassvorrichtung 10 kann beispielsweise dem Fahrer zugewandt, mittig auf einem Armaturenbrett des Kraftfahrzeugs 1 oder der Frontscheibe des Kraftfahrzeugs 1 zugewandt in einem Randbereich des Armaturenbretts angeordnet sein. Die Luftauslassvorrichtung 10 umfasst einen ersten und einen zweiten Belüftungsspalt 11 und 12, die beabstandet voneinander angeordnet und gemäß dem illustrierten Ausführungsbeispiel im Wesentlichen parallel zueinander ausgerichtet sind.

Die Luftauslassvorrichtung 10 umfasst weiter ein Dekorelement 13, das mit einer Armaturenverkleidung 20 für das Kraftfahrzeug 1 gekoppelt ist und das zwischen dem ersten und dem zweiten Belüftungsspalt 11, 12 angeordnet ist. Das Dekorelement 13 ist beispielsweise als zumindest teilweise durchleuchtbare Verblendung realisiert, welche eine Unterseite des ersten Belüftungsspalts 11 und eine Oberseite des zweiten Belüftungsspalts 12 begrenzt.

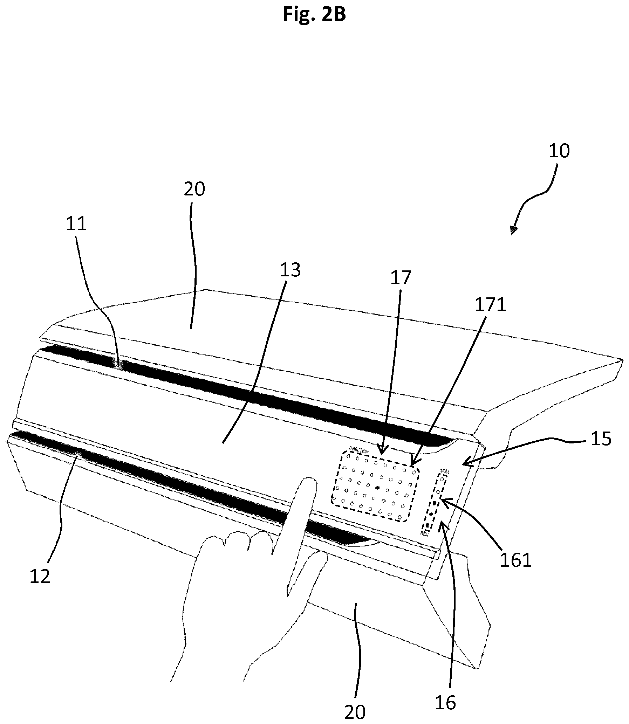

Die Luftauslassvorrichtung 10 umfasst ferner eine Bedienungseinheit 15, die mit dem Dekorelement 13 gekoppelt beziehungsweise in diesem versteckt integriert ist. Die Bedienungseinheit 15 weist ein erstes Regulierungselement 16 und ein zweites Regulierungselement 17 auf (s. Figur 2B). Mittels des ersten Regulierungselements 16 ist eine Intensität eines Luftstroms durch mindestens einen der Belüftungsspalte 11, 12 und mittels des zweiten Regulierungselements 17 ist eine Ausrichtung des Luftstroms durch mindestens einen der Belüftungsspalte 11, 12 unabhängig voneinander einstellbar.

Außerdem weist die Luftauslassvorrichtung 10 ein Positionselement 19 auf, das dazu eingerichtet ist, eine Position der in dem Dekorelement 13 integrierten ersten und zweiten Regulierungselements 16, 17 anzuzeigen. Das Positionselement 19 kann als wellenförmige Markierung auf dem Dekorelement 13 ausgebildet sein. Bevorzugt weist das Positionselement 19 ein Leuchtmittel auf und ist signaltechnisch mit der Steuereinheit 3 gekoppelt ist, sodass das Positionselement 19 mittels der Steuereinheit 3 ansteuerbar ist und in einem aktivierten Zustand Licht emittiert und ein besonders ansprechendes und schnelles Auffinden der Regulierungselemente 16, 17 ermöglicht.

Das Positionselement 19 realisiert somit insbesondere ein leuchtfähiges Auffindesymbol, welches zwischen den beiden Belüftungsspalten 11, 12 in dem Dekorelement 13 integriert ist, um die Position der in dem Dekorelement 13 verdeckt eingebauten Regulierungselemente 16, 17 optisch wahrnehmbar anzuzeigen. Vorzugsweise leuchtet das Auffindesymbol lediglich in einem Ruhezustand, in dem keine Hand Kontakt zu den Regulierungselementen 16, 17 hat oder in denen keine Hand sich den Regulierungselementen 16, 17 nähert.

Bevorzugt weist die Luftauslassvorrichtung 10 weiter eine Annäherungssensorik auf, die signaltechnisch mit der Steuereinheit 3 gekoppelt ist und mittels derer eine Annäherung eines Gegenstandes, insbesondere einer Hand, an das erste oder zweite Regulierungselement 16, 17 erfasst werden kann. Die Annäherungssensorik ist beispielsweise in dem Dekorelement 13 integriert und weist einen kapazitiven Sensor, eine Infrarot-LED oder eine Gestenkamera, mittels derer jeweils eine Annäherung einer Hand an das erste oder zweite Regulierungselement 16, 17 ermittelbar ist.

Beim Annähern einer Hand wird das leuchtende Auffindesymbol des Positionselement 19 deaktiviert und Bedienanzeigen mit Leuchtmittel der Regulierungselemente 16, 17 aktiviert (s. Figur 2B). Die leuchtfähigen Bedienanzeigen werden mittels der Steuereinheit 3 angesteuert, sodass alle relevanten Anzeigeelemente aufleuchten, die ein Einstellen des Luftstroms hinsichtlich einer Ausrichtung, einer Intensität und einer Fokussierung ermöglichen. Ein aktuell eingestellter Wert einer jeweiligen Eigenschaft ist bevorzugt so angesteuert, dass er gemäß seiner Ausgestaltung mit maximaler Helligkeit leuchtet, während benachbarte Leuchtmittel kein Licht oder Licht mit geringerer Helligkeit emittieren.

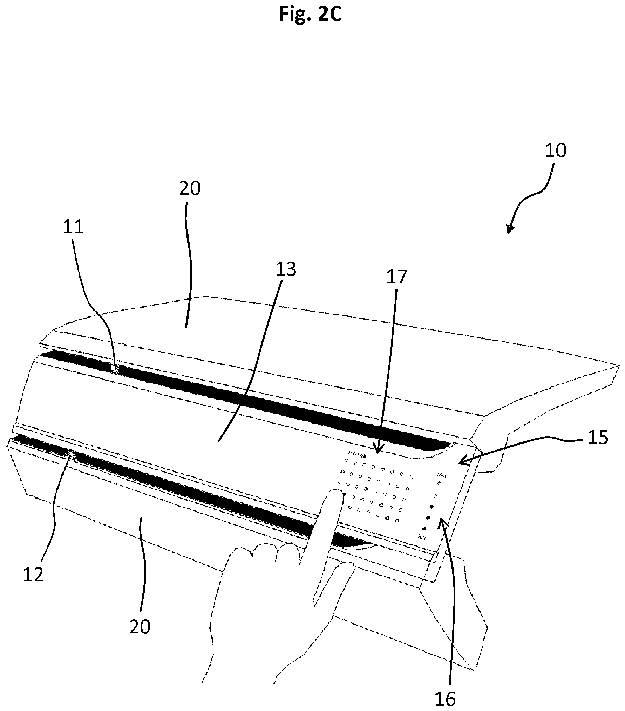

Zum komfortablen Bedienen der Luftauslassvorrichtung 10 weisen die Regulierungselemente 16, 17 jeweils berührungssensitive Oberflächenelemente 161, 171 auf, die auf Basis einer jeweiligen kapazitiven Sensorik ein elektrisches Einstellen des Luftstroms ermöglichen. Ein entsprechendes Bedienfeld mit Einstellmöglichkeiten in einer Polymermatrix ist in den Figur 2B und 2C dargestellt.

In Antwort einer sich nähernden Hand kann somit ein zuvor verstecktes Bedienfeld des ersten und/oder zweiten Regulierungselements 16, 17 aktiv geschaltet und beleuchtet werden. Im Zusammenwirken mit einem leuchtfähigen Positionselement 19 kann bei Annäherung einer Hand das Auffindesymbol deaktiviert und die Bedienanzeige der Regulierungselemente 16, 17 beleuchtet werden. Über Berührung der Dekorfläche des Dekorelements im Bedienbereich der Regulierungselemente 16, 17 kann ein jeweiliger Wert verstellt werden (s. Figur 2C). Eine veränderte Einstellung wird mittels der Steuereinheit 3 über Stellmotoren an dem Luftausströmer umgesetzt, die zum Beispiel mit einem Klappmechanismus von Luftsteuerungsklappen gekoppelt sind.

Bei Entfernung der Hand von dem Dekorelement 13 beziehungsweise dem Bedienfeld der Regulierungselemente 16, 17 bleibt die jeweilige lichtemittierende Bedienanzeige noch für eine definierte Zeit aktiv und wird beispielsweise erst nach einem zeitlichen Schwellenwert von 3 Sekunden oder 5 Sekunden, in denen kein weiterer Kontakt ermittelt wird oder keine sich erneut nähernde Hand detektiert wird, deaktiviert und nicht länger beleuchtet. Nach Ablauf einer solchen vorgegebenen Zeitspanne wird die jeweilige Bedienanzeige der Regulierungselemente 16, 17 wieder in seinen Ruhezustand geschaltet, in welchem wieder gemäß Figur 2A das Positionselement 19 mit seinem Auffindesymbol leuchtet. Die eingestellten Werte für die Luftströmung bleiben dabei erhalten.

Das Positionselement 19 dient somit als optische Schaltfläche, die in einem Ruhezustand sichtbar ist, wenn die Regulierungselemente 16, 17 nicht bedient werden. Mittels Drauftippen auf das Positionselement 19 kann ein Aktivieren und Beleuchten der Regulierungselemente 16, 17 beziehungsweise ihre jeweiligen Bedienanzeigen eingeleitet werden, während das Positionselement 19 und das lichtemittierende Auffindesymbol deaktiviert werden.

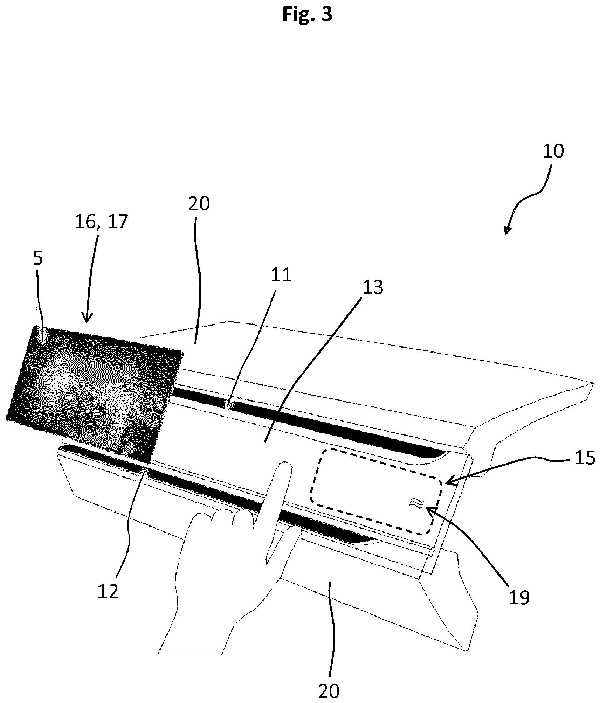

Figur 3 zeigt ein weiteres Ausführungsbeispiel der Luftauslassvorrichtung 10 unter Verwendung der Multifunktionsanzeige 5 des Kraftfahrzeugs 1. Die Steuereinheit 3 ist dabei signaltechnisch mit dem ersten und dem zweiten Regulierungselement 16, 17 und mit der Multifunktionsanzeige 5 gekoppelt, sodass mittels der Multifunktionsanzeige 5 das erste und/oder zweite Regulierungselement 16, 17 ansteuerbar und dadurch der Luftstrom elektrisch einstellbar ist. Eine solche Multifunktionsanzeige ist zum Beispiel als LCD-Display im Armaturenbereich des Kraftfahrzeugs 1 ausgebildet und wird als zusätzliche Bedienanzeige in das Anzeigebedienkonzept der Luftauslassvorrichtung 10 mit einbezogen. Ein entsprechendes Aktivieren der Multifunktionsanzeige 5 kann, wie zuvor beschrieben, mittels Antippen des Auffindesymbols des Positionselements 19 erfolgen.

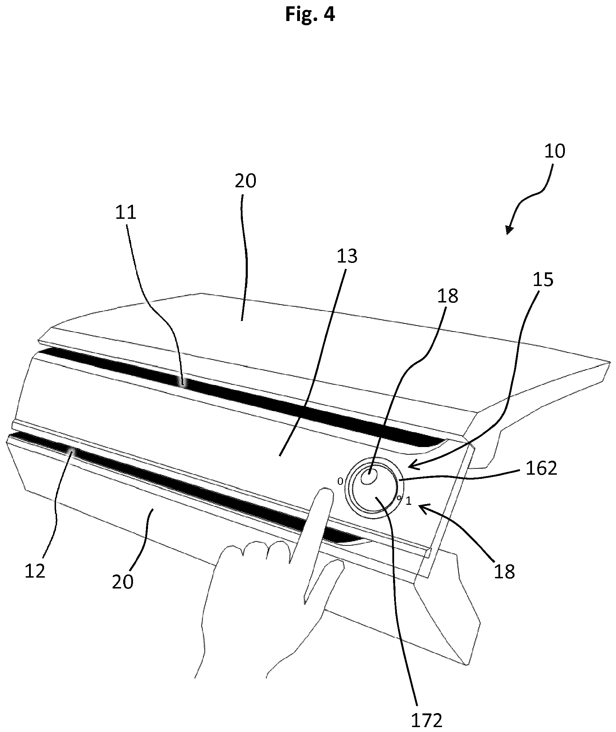

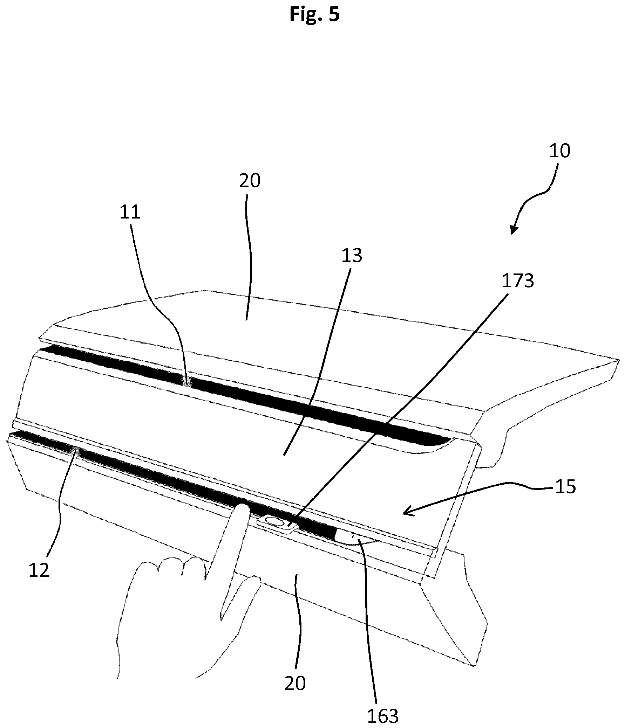

Figuren 4 und 5 illustrieren jeweils ein weiteres Ausführungsbeispiel der Luftauslassvorrichtung 10, welche ein mechanisches Einstellen der Luftströmung durch die Belüftungsspalte 11, 12 ermöglicht. Eine solche mechanische Steuerung kann zusätzlich zu der zuvor beschriebenen elektrischen Steuerung vorgesehen sein.

Das erste Regulierungselement 16 umfasst zum Beispiel ein drehbares ringförmiges Element 162 und das zweite Regulierungselement 17 ein drehbares kugelförmiges Element 172 zum mechanischen Einstellen des Luftstroms, welche jeweils in dem Dekorelement 13 integriert sind, sodass das ringförmige Element 162 das kugelförmige Element 172 umgibt (s. Figur 4).

Alternativ kann das erste Regulierungselement 16 ein verschiebbares Riegelelement 163 und das zweite Regulierungselement 17 ein verschiebbares Gleitelement 173 zum mechanischen Einstellen des Luftstroms aufweisen, welche in dem unteren, zweiten Belüftungsspalt 12 angeordnet sind, sodass das Riegelelement 163 und das Gleitelement 173 nebeneinander angeordnet sind (s. Figur 5).

Gemäß solchen Ausgestaltungen kann die Luftauslassvorrichtung mechanisch eingestellt und der in den Innenraum eintretende Luftstrom gegebenenfalls unter Verwendungen von Hilfsmarkierungen 18 hinsichtlich seiner Intensität, Richtung und Fokussierung angepasst werden. Ein solches Einstellen erfolgt mittels mechanischer Umlenkung auf Luftsteuerungsklappen und/oder Luftsteuerungslamellen.

Die beschriebene Luftauslassvorrichtung 10 ermöglicht ein designverträgliches Integrieren sowohl eines Luftausströmers, insbesondere eines Registerausströmers, als auch eines zugehörigen Anzeigebedienelements, welches bevorzugt versteckt in oder an dem Dekorelement 13 angeordnet ist. Grundsätzlich ist der Luftausströmer elektrifiziert ausgebildet und das Anzeigebedienelement ermöglicht ein elektronisches Einstellen des Luftstroms, bei dem ein oder mehrere Bedienfelder in einem Bedienungszustand deutlich sichtbar sind, während sie in einem Ruhezustand durch ein Auffindesymbol des Positionselements 19 minimal sichtbar sind beziehungsweise ihre Position in dem Dekorelement 13 durch das Auffindesymbol angedeutet ist.

### Bezugszeichenliste

- 1: Kraftfahrzeug
- 3: Steuereinheit des Kraftfahrzeugs
- 5: Multifunktionsanzeige des Kraftfahrzeugs
- 10: Vorrichtung
- 11: erster Belüftungsspalt
- 12: zweiter Belüftungsspalt
- 13: Dekorelement
- 15: Bedienungseinheit
- 16: erstes Regulierungselement
- 161: berührungssensitives Oberflächenelement
- 162: ringförmiges Element
- 163: Riegelelement
- 17: zweites Regulierungselement
- 171: berührungssensitives Oberflächenelement
- 172: kugelförmiges Element
- 173: Gleitelement
- 18: Hilfsmarkierung
- 19: Positionselement
- 20: Armaturenverkleidungselemente

## Patentansprüche

1. Kraftfahrzeug (1) mit einer Armaturenverkleidung (20) und einer Luftauslassvorrichtung (10) für einen Innenraum des Kraftfahrzeugs (1), umfassend:
- einen ersten Belüftungsspalt (11) und einen zweiten Belüftungsspalt (12), die beabstandet voneinander angeordnet sind,
- ein Dekorelement (13), das mit der Armaturenverkleidung (20) des Kraftfahrzeugs (1) gekoppelt ist und das zwischen dem ersten und dem zweiten Belüftungsspalt (11, 12) so angeordnet ist, dass es eine Unterseite des ersten Belüftungsspalts (11) und eine Oberseite des zweiten Belüftungsspalts (12) begrenzt, wobei der erste Belüftungsspalt (11) einen oberen Belüftungszugang und der zweite Belüftungsspalt (12) einen unteren Belüftungszugang zum Innenraum des Kraftfahrzeugs (1) realisiert bezogen auf eine Vertikale des betriebsbereiten Kraftfahrzeugs (1), und das Dekorelement (13) dem Innenraum des Kraftfahrzeugs (1) zugewandt ist und eine Verblendung zum Bedecken eines Abschnitts der Luftauslassvorrichtung (10) realisiert, und
- eine Bedienungseinheit (15), die mit dem Dekorelement (13) gekoppelt ist und die ein erstes Regulierungselement (16) und ein zweites Regulierungselement (17) aufweist, wobei mittels des ersten Regulierungselements (16) eine Intensität eines Luftstroms durch mindestens einen der Belüftungsspalte (11, 12) und mittels des zweiten Regulierungselements (17) eine Ausrichtung des Luftstroms durch mindestens einen der Belüftungsspalte (11, 12) unabhängig voneinander einstellbar ist, und
- eine Steuereinheit (3), die signaltechnisch mit dem ersten und dem zweiten Regulierungselement (16, 17) gekoppelt ist, **dadurch gekennzeichnet,**
- **dass** das erste und das zweite Regulierungselement (16, 17) jeweils ein berührungssensitives Oberflächenelement (161, 171) aufweisen, das in dem Dekorelement (13) integriert ist, sodass mittels der Steuereinheit (3) eine Position eines Gegenstandes auf einer der berührungssensitiven Oberflächenelemente (161, 171) des ersten und/oder zweiten Regulierungselements (16, 17) ermittelbar und dadurch der Luftstrom mittels der Regulierungselemente (16, 17) elektrisch steuerbar ist.

2. Kraftfahrzeug (1) nach Anspruch 1, bei dem das erste und das zweite Regulierungselement (16, 17) jeweils eine kapazitive Bedienanzeige mit einem Leuchtmittel aufweisen, die in dem Dekorelement (13) integriert ist und mittels derer der Luftstrom elektrisch steuerbar ist.

3. Kraftfahrzeug (1) nach Anspruch 2, bei dem die Steuereinheit (3) dazu eingerichtet ist, das jeweilige Leuchtmittel der jeweiligen Bedienanzeige in einem Betriebszustand, in dem ein Gegenstand auf einer der berührungssensitiven Oberflächenelemente (161, 171) des ersten oder zweiten Regulierungselements (16, 17) ermittelt ist, zu aktivieren.

4. Kraftfahrzeug (1) nach einem der Ansprüche 1 bis 3, umfassend:
ein Positionselement (19), das dazu eingerichtet ist,
eine Position des ersten und/oder zweiten Regulierungselements (16, 17) in Bezug auf das Dekorelement (13) anzuzeigen.

5. Kraftfahrzeug (1) nach Anspruch 4, bei dem das Positionselement (19) ein Leuchtmittel umfasst und signaltechnisch mit der Steuereinheit (3) gekoppelt ist und bei dem die Steuereinheit (3) dazu eingerichtet ist, das Leuchtmittel des Positionselements (19) in einem Ruhezustand, in dem kein Gegenstand auf einer der berührungssensitiven Oberflächenelemente (161, 171) des ersten oder zweiten Regulierungselements (16, 17) ermittelt ist, zu aktivieren und in einem Betriebszustand, in dem ein Gegenstand auf einer der berührungssensitiven Oberflächenelemente (161, 171) des ersten oder zweiten Regulierungselements (16, 17) ermittelt ist, zu deaktivieren.

6. Kraftfahrzeug (1) nach einem der Ansprüche 1 bis 5, umfassend:
eine Annäherungssensorik, die signaltechnisch mit der Steuereinheit (3) gekoppelt ist und mittels derer eine Annäherung eines Gegenstandes an das erste oder zweite Regulierungselement (16, 17) ermittelbar ist, sodass die Luftauslassvorrichtung (10) in Abhängigkeit von Messsignalen der Annäherungssensorik betreibbar ist.

7. Kraftfahrzeug (1) nach Anspruch 6, bei dem die Annäherungssensorik einen kapazitiven Sensor, eine Infrarot-LED oder eine Gestenkamera aufweist, mittels derer jeweils eine Annäherung eines Gegenstandes an das erste oder zweite Regulierungselement (16, 17) ermittelbar ist.

8. Kraftfahrzeug (1) nach einem der Ansprüche 1 bis 7, umfassend:
eine Objekterkennungssensorik, die signaltechnisch mit der Steuereinheit (3) gekoppelt ist und mittels derer eine Position eines Objektes in dem Innenraum des Kraftfahrzeugs (1) ermittelbar ist, sodass die Luftauslassvorrichtung (10) in Abhängigkeit von Messsignalen der Objekterkennungssensorik betreibbar ist.

9. Kraftfahrzeug (1) nach einem der Ansprüche 1 bis 8, wobei die Steuereinheit (3) signaltechnisch mit dem ersten und dem zweiten Regulierungselement (16, 17) und mit einer Multifunktionsanzeige (5) des Kraftfahrzeugs (1) gekoppelt ist, sodass mittels der Multifunktionsanzeige (5) das erste und/oder zweite Regulierungselement (16, 17) ansteuerbar und dadurch der Luftstrom mittels der Regulierungselemente (16, 17) elektrisch einstellbar ist.

10. Kraftfahrzeug (1) nach Anspruch 1, bei dem das erste Regulierungselement (16) und das zweite Regulierungselement (17) zusätzlich jeweils eine mechanische Kopplung zu jeweiligen Luftsteuerungsklappen aufweisen, sodass der Luftstrom mittels der Regulierungselemente (16, 17) mechanisch einstellbar ist.

11. Kraftfahrzeug (1) nach Anspruch 10, bei dem das erste Regulierungselement (16) ein drehbares ringförmiges Element (162) und das zweite Regulierungselement (17) ein drehbares kugelförmiges Element (172) zum mechanischen Einstellen des Luftstroms umfasst, welche jeweils in dem Dekorelement (13) integriert sind, sodass das ringförmige Element (162) das kugelförmige Element (172) umgibt.

12. Kraftfahrzeug (1) nach Anspruch 10, bei dem das erste Regulierungselement (16) ein verschiebbares Riegelelement (163) und das zweite Regulierungselement (17) ein verschiebbares Gleitelement (173) zum mechanischen Einstellen des Luftstroms umfasst, welche in dem ersten oder zweiten Belüftungsspalt (11, 12) angeordnet sind, sodass das Riegelelement (163) und das Gleitelement (173) übereinander oder nebeneinander angeordnet sind.

## Claims

1. Motor vehicle (1) having a dashboard panelling (20) and an air outlet apparatus (10) for an interior of the motor vehicle (1), comprising:
- a first ventilation gap (11) and a second ventilation gap (12), which are arranged spaced apart from one another,
- a decorative element (13), which is coupled to the dashboard panelling (20) of the motor vehicle (1) and which is arranged between the first and second ventilation gap (11, 12) so that it delimits a bottom side of the first ventilation gap (11) and a top side of the second ventilation gap (12), wherein the first ventilation gap (11) implements an upper ventilation access and the second ventilation gap (12) implements a lower ventilation access to the interior of the motor vehicle (1) based on a vertical of the operationally ready motor vehicle (1), and the decorative element (13) faces towards the interior of the motor vehicle (1) and executes veneering to cover a section of the air outlet apparatus (10), and
- an operator control unit (15), which is coupled to the decorative element (13) and which has a first regulating element (16) and a second regulating element (17), wherein, by means of the first regulating element (16), an intensity of an airflow through at least one of the ventilation gaps (11, 12) and, by means of the second regulating element (17), an alignment of the airflow through at least one of the ventilation gaps (11, 12) can be adjusted independently of one another, and
- a control unit (3), which is coupled in terms of signal technology to the first and the second regulating element (16, 17), **characterized in that**
- the first and the second regulating element (16, 17) each have a touch-sensitive surface element (161, 171), which is integrated into the decorative element (13) so that a position of an object on one of the touch-sensitive surface elements (161, 171) of the first and/or second regulating element (16, 17) can be identified by means of the control unit (3) and as a result the airflow can be controlled electrically by means of the regulating elements (16, 17).

2. Motor vehicle (1) according to Claim 1, in which the first and the second regulating element (16, 17) each have a capacitive operator control display having an illuminant, which operator control display is integrated into the decorative element (13) and by means of which the airflow can be controlled electrically.

3. Motor vehicle (1) according to Claim 2, in which the control unit (3) is configured to activate the respective illuminant of the respective operator control display in an operating state in which an object is identified on one of the touch-sensitive surface elements (161, 171) of the first or second regulating element (16, 17).

4. Motor vehicle (1) according to any one of Claims 1 to 3, comprising:
a position element (19), which is configured to display a position of the first and/or second regulating element (16, 17) in relation to the decorative element (13).

5. Motor vehicle (1) according to Claim 4, in which the position element (19) comprises an illuminant and is coupled in terms of signal technology to the control unit (3) and in which the control unit (3) is configured to activate the illuminant of the position element (19) in a rest state in which no object is identified on one of the touch-sensitive surface elements (161, 171) of the first or second regulating element (16, 17) and to deactivate the illuminant of the position element in an operating state in which an object is identified on one of the touch-sensitive surface elements (161, 171) of the first or second regulating element (16, 17).

6. Motor vehicle (1) according to any one of Claims 1 to 5, comprising:
a proximity sensor system, which is coupled in terms of signal technology to the control unit (3) and by means of which a proximity of an object to the first or second regulating element (16, 17) can be identified so that the air outlet apparatus (10) can be operated depending on measurement signals of the proximity sensor system.

7. Motor vehicle (1) according to Claim 6, in which the proximity sensor system has a capacitive sensor, an infrared LED or a gesture camera, by means of which in each case a proximity of an object to the first or second regulating element (16, 17) can be identified.

8. Motor vehicle (1) according to any one of Claims 1 to 7, comprising:
an object recognition sensor system, which is coupled in terms of signal technology to the control unit (3) and by means of which a position of an object in the interior of the motor vehicle (1) can be identified so that the air outlet apparatus (10) can be operated depending on measurement signals of the object recognition sensor system.

9. Motor vehicle (1) according to any one of Claims 1 to 8, wherein the control unit (3) is coupled in terms of signal technology to the first and the second regulating element (16, 17) and to a multifunction display (5) of the motor vehicle (1) so that the first and/or second regulating element (16, 17) can be actuated by means of the multifunction display (5) and as a result the airflow can be adjusted electrically by means of the regulating elements (16, 17).

10. Motor vehicle (1) according to Claim 1, in which the first regulating element (16) and the second regulating element (17) additionally each have a mechanical coupling to respective air control flaps so that the airflow can be adjusted mechanically by means of the regulating elements (16, 17).

11. Motor vehicle (1) according to Claim 10, in which the first regulating element (16) comprises a rotatable annular element (162) and the second regulating element (17) comprises a rotatable spherical element (172) for mechanically adjusting the airflow, which elements are each integrated into the decorative element (13) so that the annular element (162) surrounds the spherical element (172) .

12. Motor vehicle (1) according to Claim 10, in which the first regulating element (16) comprises a displaceable locking element (163) and the second regulating element (17) comprises a displaceable sliding element (173) for mechanically adjusting the airflow, which elements are arranged in the first or second ventilation gap (11, 12) so that the locking element (163) and the sliding element (173) are arranged above one another or next to one another.

## Revendications

1. Véhicule automobile (1) avec un panneau (20) de planche de bord et un dispositif (10) de sortie d'air pour un habitacle du véhicule automobile (1), comprenant :
- une première fente de ventilation (11) et une deuxième fente de ventilation (12), qui sont agencées à distance l'une de l'autre,
- un élément décoratif (13) qui est relié au panneau (20) de planche de bord du véhicule automobile (1) et qui est agencé entre la première et la deuxième fentes de ventilation (11, 12) de manière à délimiter une face inférieure de la première fente de ventilation (11) et une face supérieure de la deuxième fente de ventilation (12), la première fente de ventilation (11) réalisant un accès de ventilation supérieur et la deuxième fente de ventilation (12) réalisant un accès de ventilation inférieur à l'intérieur du véhicule automobile (1) par rapport à une verticale du véhicule automobile (1) prêt à fonctionner, et l'élément décoratif (13) étant tourné vers l'intérieur du véhicule automobile (1) et réalisant un cache pour recouvrir une partie du dispositif (10) de sortie d'air, et
- une unité de commande (15) qui est reliée à l'élément décoratif (13) et qui présente un premier élément de réglage (16) et un deuxième élément de réglage (17), une intensité d'un flux d'air à travers au moins une des fentes de ventilation (11, 12), au moyen du premier élément de réglage (16), et une orientation du flux d'air à travers au moins une des fentes de ventilation (11, 12) au moyen du deuxième élément de réglage (17), étant aptes à être réglées indépendamment l'une de l'autre, et
- une unité de commande (3) qui est reliée au premier et au deuxième éléments de réglage (16, 17) par une technique de signal, **caractérisé**
**en ce que** le premier et le deuxième éléments de réglage (16, 17) présentent chacun un élément de surface tactile (161, 171), qui est intégré dans l'élément décoratif (13), de sorte qu'une position d'un objet sur l'un des éléments de surface tactiles (161, 171) du premier et/ou du deuxième éléments de réglage (16, 17) est apte à être déterminée au moyen de l'unité de commande (3) et que le flux d'air est apte à ainsi être commandé électriquement au moyen des éléments de réglage (16, 17).

2. Véhicule automobile (1) selon la revendication 1, dans lequel le premier et le deuxième éléments de réglage (16, 17) présentent chacun un affichage de commande capacitif avec un moyen lumineux, qui est intégré dans l'élément décoratif (13) et au moyen duquel le flux d'air est apte à être commandé électriquement.

3. Véhicule automobile (1) selon la revendication 2, dans lequel l'unité de commande (3) est agencée pour activer le moyen lumineux respectif de l'indicateur de commande respectif dans un état de fonctionnement dans lequel un objet est détecté sur l'un des éléments tactiles de surface (161, 171) du premier ou du deuxième élément de réglage (16, 17).

4. Véhicule automobile (1) selon l'une des revendications 1 à 3, comprenant :
un élément de positionnement (19) adapté pour indiquer une position du premier et/ou du deuxième élément de réglage (16, 17) par rapport à l'élément décoratif (13).

5. Véhicule automobile (1) selon la revendication 4, dans lequel l'élément de position (19) comprend un moyen lumineux et est relié à l'unité de commande (3) par une technique de signal, et dans lequel l'unité de commande (3) est agencée pour activer le moyen lumineux de l'élément de position (19) dans un état de repos, dans lequel aucun objet n'est posé sur l'un des éléments de surface tactiles (161, 171) du premier ou du deuxième élément de réglage (16, 17) est détecté, et pour le désactiver dans un état de fonctionnement dans lequel un objet est détecté sur l'un des éléments de surface tactiles (161, 171) du premier ou du deuxième éléments de réglage (16, 17).

6. Véhicule automobile (1) selon l'une des revendications 1 à 5, comprenant :
un système de détection de proximité qui est relié à l'unité de commande (3) par une technique de signal et au moyen duquel il est possible de déterminer une proximité d'un objet avec le premier ou le deuxième élément de réglage (16, 17), de sorte que le dispositif (10) de sortie d'air est apte à être actionné en fonction de signaux de mesure provenant du système de détection de proximité.

7. Véhicule automobile (1) selon la revendication 6, dans lequel le système de détection de proximité comprend un capteur capacitif, une DEL infrarouge ou une caméra gestuelle, au moyen desquels il est possible de déterminer respectivement une approche d'un objet vers le premier ou le deuxième élément de réglage (16, 17).

8. Véhicule automobile (1) selon l'une des revendications 1 à 7, comprenant :
un capteur de reconnaissance d'objet, qui est relié à l'unité de commande (3) par une technique de signal et au moyen duquel une position d'un objet dans l'habitacle du véhicule automobile (1) est apte à être déterminée, de sorte que le dispositif (10) de sortie d'air est apte à être actionné en fonction de signaux de mesure provenant du capteur de reconnaissance d'objet.

9. Véhicule automobile (1) selon l'une des revendications 1 à 8, dans lequel l'unité de commande (3) est reliée par une technique de signal au premier et au deuxième éléments de réglage (16, 17) et à un affichage multifonctions (5) du véhicule automobile (1), de sorte que le premier et/ou le deuxième éléments de réglage (16, 17) sont aptes à être commandés au moyen de l'affichage multifonctions (5) et que le flux d'air est apte à ainsi être réglé électriquement au moyen des éléments de réglage (16, 17).

10. Véhicule automobile (1) selon la revendication 1, dans lequel le premier élément de réglage (16) et le deuxième élément de réglage (17) présentent en outre chacun un liaison mécanique avec des volets de commande d'air respectifs, de sorte que le flux d'air est apte à être réglé mécaniquement au moyen des éléments de réglage (16, 17) .

11. Véhicule automobile (1) selon la revendication 10, dans lequel le premier élément de réglage (16) comprend un élément annulaire rotatif (162) et le deuxième élément de réglage (17) comprend un élément sphérique rotatif (172) pour le réglage mécanique du flux d'air, qui sont respectivement intégrés dans l'élément de décoration (13) de sorte que l'élément annulaire (162) entoure l'élément sphérique (172).

12. Véhicule automobile (1) selon la revendication 10, dans lequel le premier élément de réglage (16) comprend un élément de verrouillage coulissant (163) et le deuxième élément de réglage (17) comprend un élément coulissant qui coulisse (173) pour le réglage mécanique du flux d'air, agencés dans la première ou la deuxième fente de ventilation (11, 12), de sorte que l'élément de verrouillage (163) et l'élément coulissant (173) sont agencés l'un au-dessus de l'autre ou côte à côte.
